# EUROPEAN PATENT APPLICATION

(11) **EP 2 669 764 A2**
(43) Date of publication of application: **04.12.2013**
(21) Application number: 13152722.8
(22) Date of filing: 25.01.2013
(51) Int. Cl.: G06F 3/02, G06F 3/023, H01H 13/83, H04M 1/725, H01H 9/18

(54) **Electronic apparatus comprising a keypad unit having a display element, key inputting method and computer-readable medium**

(30) Priority: 29.05.2012 KR 20120056922
(71) Applicant: Samsung Electronics Co., Ltd, Gyeonggi-do 443-742 (KR)
(72) Inventor: Ha, Kwang-Soo, Seoul (KR); Kim, Hee-jeong, Seoul (KR); Jeon, Jin-hee, Seoul (KR); Jo, Han-kyung, Seoul (KR); Fujimura, Noriyuki, Seoul (KR)
(74) Representative: Walaski, Jan Filip

(57) **Abstract**

An electronic apparatus includes a key pad unit which is disposed on the key board and displays a plurality of divided button areas, a mode determination unit which determines an operation mode of the key pad unit, and a control unit which controls the key pad unit to display information regarding a plurality of keys corresponding to the determined operation mode on the plurality of button areas.

## Description

The present invention relates to an electronic apparatus, a key inputting method, and a computer-readable medium, and more particularly, to an electronic apparatus capable of receiving various commands using an adaptively changeable key pad.

A general computer system has various input apparatuses to receive a control command from a user, and a key board is one of the most widely used input apparatuses.

A key board is usable to input a text, and also has a hot key function so as to execute a command quickly using a predefined key combination. However, in order to use such a hot key function, a user needs to get familiarized with all of the hot keys before using them. However, it is difficult for a user to know all of those hot keys in advance.

Therefore, a method may be required to allow a user to select a hot key in a more convenient way without compromising usability of an existing key board.

The present general inventive concept provides an electronic apparatus capable of receiving various commands using an adaptively changeable key pad, a key inputting method and a computer-readable medium.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing an electronic apparatus including a key pad unit to display a plurality of divided button areas, a mode determination unit to determine an operation mode of the key pad unit, and a control unit to control the key pad unit to display information regarding a plurality of keys corresponding to the determined operation mode on the plurality of button areas. The key pad unit may have at least one image display element. The image display element may be one of E-ink, LCD, and AMOLED disposed on an upper part thereof.

The key pad unit may receive a selection of at least one button area from among the plurality of button areas, and the control unit may perform an event corresponding to the selected button area and a current operation mode.

The plurality of button areas may include a first button group which displays a plurality of operation modes individually and a second button group which displays information regarding a plurality of keys corresponding to the determined operation mode individually.

Each of the plurality of key areas may display key information in an icon form.

The first button group may receive a selection of an operation mode of the key pad, and the control unit may control the key pad unit to display information regarding a plurality of keys corresponding to an operation mode selected through the first button group on the second button group.

The control unit may control the key pad unit to display a button area of a first button group corresponding to the determined operation mode in a different shadow or color from that of other button areas of a first button group.

The mode determination unit, when the plurality of button areas are selected in a predefined order, may change a current operation mode to an operation mode corresponding to the predefined order.

The apparatus may further include an authentication unit which performs user authentication by determining whether a plurality of button areas selected through the key pad unit are a plurality of predefined button areas, and the control unit may inactivate a display operation of the plurality of button areas before user authentication and activate a display operation of the plurality of inactivated button areas after user authentication.

An operation mode of the key pad unit may be at least one of a log-in mode, a number key mode, a multimedia mode, a symbol mode, a shortcut mode, and an image display mode.

The control unit may control the key pad unit to display an image corresponding to contents currently being reproduced on at least one of the plurality of button areas if an operation mode of the key pad unit is a multimedia mode.

The control unit may control the key pad unit to display an image corresponding to a reproduction time of contents currently being reproduced on at least one of the plurality of button areas if an operation mode of the key pad unit is a multimedia mode.

The control unit may control the key pad unit to divide and display a pre-stored image on the plurality of button areas if an operation mode of the key pad unit is an image display mode.

The control unit, if an external apparatus is connected to the electronic apparatus, may control the key pad unit to display at least one information from among apparatus information and connection information of the external apparatus on at least one of the plurality of button areas.

The foregoing and/or other features and utilities of the present general inventive concept may also be achieved by providing an a key inputting method of an electronic apparatus including a key pad unit disposed on a key board to display a plurality of divided button areas, the method includes determining an operation mode of the key pad unit, displaying information regarding each of a plurality of keys corresponding to the determined operation mode in the plurality of button areas, receiving a selection of at least one button area from among the plurality of button areas, and performing an event corresponding to the selected button area and a current operation area. The key pad unit may have at least one image display element. Then at least one image display element may be one of E-ink, LCD, and AMOLED disposed on an upper part thereof.

Each of the plurality of key areas may display key information in an icon form.

The displaying may include displaying a plurality of operation modes on a first button group individually, and displaying information regarding a plurality of keys corresponding to the determined operation mode on a second button group.

An operation mode of the key pad unit may be at least one of a log-in mode, a number key mode, a multimedia mode, a symbol mode, a shortcut mode, and an image display mode.

The displaying may include displaying an image or a reproduction time corresponding to contents currently being reproduced in at least one of the plurality of button areas if an operation mode of the key pad unit is a multimedia mode.

The displaying may include dividing and displaying a pre-stored image on the plurality of button areas if an operation mode of the key pad unit is an image display mode.

The foregoing and/or other features and utilities of the present general inventive concept may also be achieved by providing an a computer-readable medium to contain computer-readable codes as a program to execute a key inputting method in an electronic apparatus including a key pad unit disposed on a key board to display a plurality of divided button areas, the key inputting method including determining an operation mode of the key pad unit, displaying information regarding each of a plurality of keys corresponding to the determined operation mode on the plurality of button areas, receiving a selection of at least one button area from among a plurality of button areas, and performing an event corresponding to the selected button area and a current operation mode. The key pad unit may have at least one image display element. The at least one image display element may be one of E-ink, LCD, and AMOLED disposed on an upper part thereof.

The foregoing and/or other features and utilities of the present general inventive concept may also be achieved by providing an electronic apparatus having a key board, the electronic apparatus including a key pad unit disposed on the key board, having a plurality of divided button areas each having a button portion to generate an input signal and each having an image display element to correspond to the button portion, and a control unit configured to control the image display element of the corresponding button area to display first information according to a first operation mode of the electronic apparatus, to receive the input signal from the button portion of the corresponding button area to perform a first operation corresponding to the first operation mode, to control on the display element of the corresponding button area to display second information according to a second operation of the electronic apparatus, and to receive the input signal from the button portion of the corresponding button area to perform a second operation corresponding to the second operation mode of the electronic apparatus.

The key pad unit may include a first button group having a plurality of first button areas to correspond to operation modes; and a second button group having a plurality of second button areas to correspond to sub-operations according to one of the operation modes.

The foregoing and/or other features and utilities of the present general inventive concept may also be achieved by providing an electronic apparatus having a key board, the electronic apparatus including an input unit disposed on a first portion of the key board to input data, a key pad unit disposed on a second portion of the key board, having a plurality of divided button areas each having a button portion to generate an input signal and each having an image display element to display different information correspond to different operation modes, and a control unit to receive the input data from the input unit to perform an input operation according to the received input data regardless of the different operation modes, and to receive an input signal to perform an operation according to the receive input signal and the displayed information corresponding to one of the different operation modes.

The input unit may selectively generate the input data in predetermined ones of the different operation modes in response to selection of a key of the input unit. The key pad unit may generate the input signal in the different operation modes in response to selection of one of the button areas of the key pad unit.

These and/or other features and utilities of the present general inventive concept will become apparent and more readily appreciated from the following description of the embodiments, taken in conjunction with the accompanying drawings of which:
FIG. 1 is a configuration view illustrating an electronic apparatus according to an exemplary embodiment of the present general inventive concept;
FIG. 2 is a view illustrating a key pad unit according to an exemplary embodiment of the present general inventive concept;
FIG. 3 is a side view illustrating a key pad unit having a plurality of buttons according to an exemplary embodiment of the present general inventive concept;
FIG. 4 is a view illustrating an electronic apparatus according to an exemplary embodiment of the present general inventive concept;
FIGS. 5 and 6 are views illustrating an operation of a key pad unit in a log-in mode according to an exemplary embodiment of the present general inventive concept;
FIG. 7 is a view illustrating an operation of a key pad unit in a number key mode according to an exemplary embodiment of the present general inventive concept;
FIG. 8 is a view illustrating an operation of a key pad unit in a direction key mode according to an exemplary embodiment of the present general inventive concept;
FIG. 9 is a view illustrating an operation of a key pad unit in a symbol mode according to an exemplary embodiment of the present general inventive concept;
FIG. 10 is a view illustrating an operation of a key pad unit in a multimedia mode according to an exemplary embodiment of the present general inventive concept;
FIG. 11 is a view illustrating an operation of a key pad unit in a shortcut mode according to an exemplary embodiment of the present general inventive concept;
FIG. 12 is a view illustrating an operation of a key pad unit in an image display mode according to an exemplary embodiment of the present general inventive concept;
FIG. 13 is a view illustrating a method of changing an operation mode of a key pad unit according to an exemplary embodiment of the present general inventive concept;
FIGS. 14 and 15 are views illustrating an operation of a key pad unit when an external apparatus is connected thereto, according to an exemplary embodiment of the present general inventive concept; and
FIG. 16 is a flowchart illustrating a key inputting method according to an exemplary embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

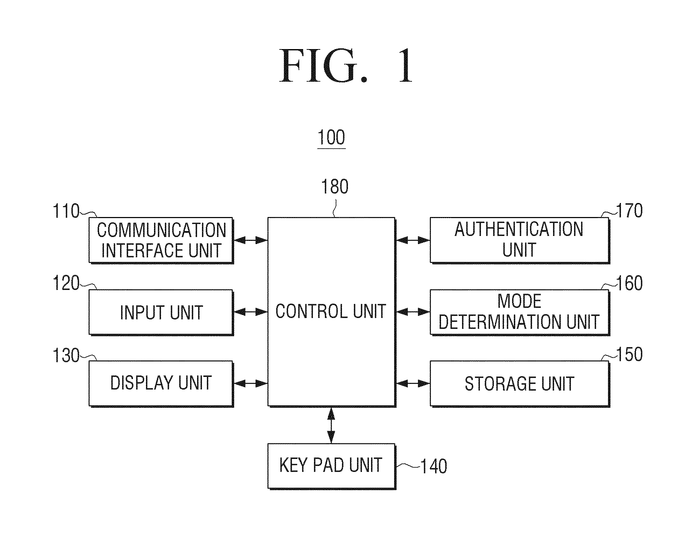

FIG. 1 is a configuration view illustrating an electronic apparatus 100 according to an exemplary embodiment of the present general inventive concept.

Referring to FIG. 1, the electronic apparatus 100 according to an exemplary embodiment may include a communication interface unit 110, an input unit 120, a display unit 130, a key pad unit 140, a storage unit 150, a mode determination unit 160, an authentication unit 170, and a control unit 180. The electronic apparatus 100 may be a computer apparatus, for example, a personal computer (PC) or a notebook computing apparatus, having a key board. It is possible that the electronic apparatus 100 may have the input unit 120 and the key pad unit 140 as a single housing.

The communication interface unit 110 is configured to connect the electronic apparatus 100 to an external apparatus (not illustrated) or to communicate with the external apparatus according to wired and/or wireless communication methods, for example, a Local Area Network (LAN), an Internet network, GSM, UMTS, LTE, WiBRO, and so on.

The input unit 120 may include a plurality of function keys through which a user may set or select various functions of the electronic apparatus 100. The input unit 120 may be a key board with keys or buttons to receive a user input (data or command) input from a user. The key board may be a QWERTY key board. The input unit 120 may further include a mouse and/or a touch pad to input a user input (data or command).

The display unit 130 may display various information provided by the electronic apparatus 100. Herein, the display unit 130 may be a display apparatus such as CRT, LCD, AMOLED, and so on. It is possible that the display unit 130 may be a touch pad to display various information provided by the electronic apparatus 100 and to receive a user input 9data or command) to control the electronic apparatus 100.

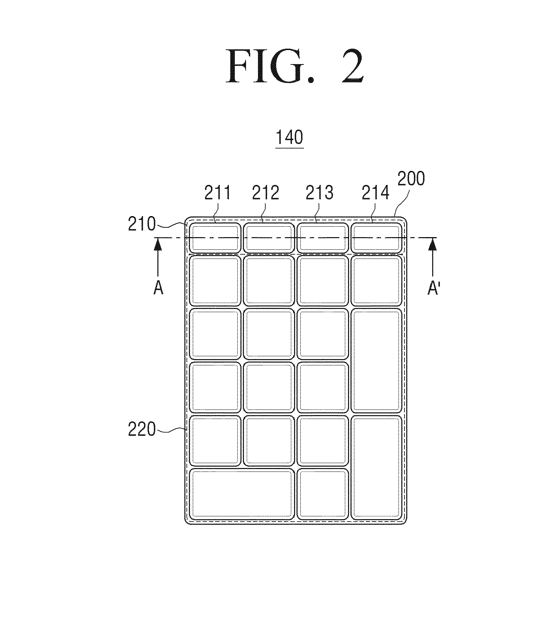

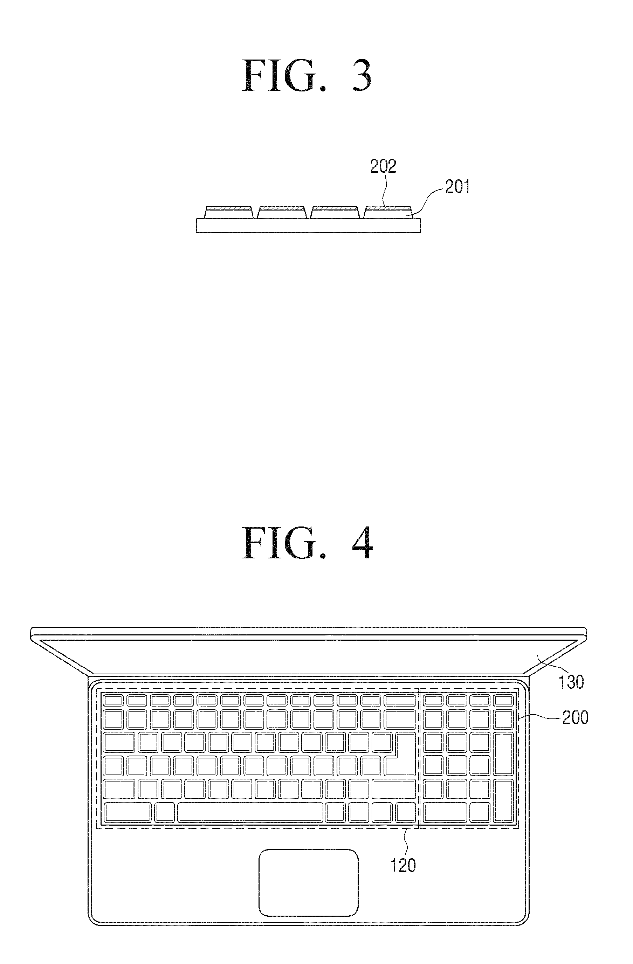

The key pad unit 140 is disposed in a key board and displays a plurality of button areas. The plurality of button areas of the key pad units 140 may be divided or separated from each other. The key pad unit 140 may be realized as a touch pad or a plurality of separate buttons capable of displaying an image. This will be explained later with reference to FIGS. 2 and 3.

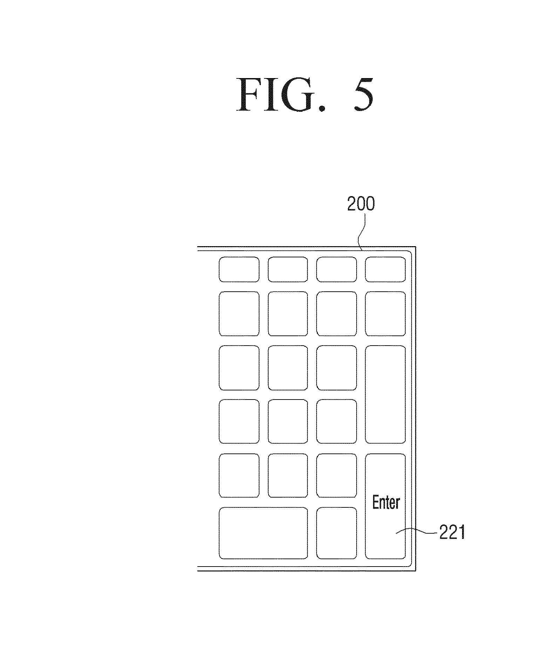

The key pad unit 140 may display information regarding each of a plurality of keys on a plurality of button areas according to an operation mode. The information on each of the plurality of keys may be variable according to an operation mode. In this case, the key pad unit 140 may display an icon corresponding to key information on each of a plurality of button areas. The example of key information to be displayed according to an operation mode will be explained later with reference to FIGS. 5 to 15.

Here, the key information may be information representing a text, number, or symbol (for example, 1, 2, +, etc.) or information regarding a hot key to perform a specific function (for example, displaying an Internet window (web browser), reproducing contents, pausing reproduction of contents, etc.).

If the electronic apparatus 100 reproduces contents, the key pad unit 140 may display an image corresponding to contents currently being reproduced on at least one button area from among a plurality of button areas. The key pad unit 140 may display an image corresponding to a reproduction time of contents currently being reproduced on at least one button area from among a plurality of button areas.

If the electronic apparatus 100 is connected to an external apparatus, the key pad unit 140 may display at least one information from among apparatus information regarding a connected external apparatus and connection information on at least one button area from among a plurality of button areas. Herein, the apparatus information is information to identify a connected external apparatus, such as apparatus name, apparatus type, and so on, and the connection information is information regarding whether data is transmitted/received to/from a connected external apparatus and regarding an amount of the data being transmitted/received or a transmitting or receiving time of the data if data is being transmitted/received.

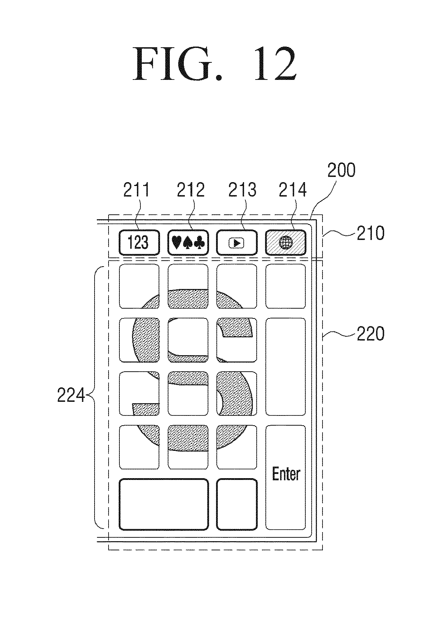

The key pad unit 140 may be divided into pre-stored images in the storage unit 150 which will be explained later, and display the images in a plurality of button areas, an example of which will be explained later with reference to FIG. 12.

The key pad unit 140 may receive a user selection through a plurality of button areas and transmit information regarding the selected button area to the control unit 180 which will be explained later. In this case, the key pad unit 140 may transmit information regarding a current operation mode together with the information regarding the selected button area.

Meanwhile, a display operation of the key pad unit 140 may be associated with an authentication operation of the authentication unit 170 which will be explained later. The display operation of the key pad unit 140 may be inactivated or activated according to the authentication operation. The display operation of the key pad unit 140 may be inactivated before a user authentication and may be activated after the user authentication. Herein, activation or inactivation indicates whether a display operation of key information corresponding to a current operation mode is performed or not. That is, even if a display operation is inactivated, a user selection may be received, and a plurality of button areas may display a predefined color.

Meanwhile, in the exemplary embodiment, the key pad unit 140 and the input unit 120 are separated for convenience of explanation, but it is possible that the input unit 120 and the key pad unit 140 may be combined as one key board. It is also possible that entire keys of a key board may be realized as buttons having display elements as illustrated in FIG. 3.

The storage unit 150 stores computer-readable codes as a program to drive the electronic apparatus 100. The storage unit 150 may store a program which is a group of various commands necessary to drive the electronic apparatus 100.

In addition, the storage unit 150 stores key information corresponding to each of a plurality of button areas for each operation mode. The storage unit 150 may store a plurality of button areas for each operation mode and key information mapped with each of a plurality of button areas as a look-up table. Such a look-up table may be changed by a user manipulation or through update.

The storage unit 150 may store an icon corresponding to key information. The storage unit 150 may store a plurality of button areas for each operation mode and icon information (address information of icon or icon image) mapped with each of a plurality of button areas as a look-up table. Such a look-up table may be changed by a user manipulation or through update.

The storage unit 150 stores contents. Herein, the contents may be sound contents, video contents, images (still images), and so on. The storage unit 150 may be realized as an internal storage medium of the electronic apparatus 100 or an external storage medium such as a removable disk including a USB memory, a flash memory, etc., a storage medium connected to the electronic apparatus, a web server through network, and so on.

The mode determination unit 160 determines an operation mode of the key pad unit 140. The determination unit 160 may determine an operation mode of the key pad unit 140 in accordance with an operation status of the electronic apparatus 100. For example, when the electronic apparatus 100 is reproducing contents, the mode determination unit 160 may determine the mode to be a multimedia mode, and when a user is doing Internet surfing, the mode determination unit 160 may determine the mode to be a shortcut mode.

Meanwhile, in the exemplary embodiment, an operation mode is determined in accordance with an operation status of the electronic apparatus 100, but it is possible that an operation mode may be determined only by a user selection. That is, an operation may be changed automatically or manually.

Herein, the operation mode may be a log-in mode, a number key mode, a multimedia mode, a symbol mode, a shortcut mode, an image display mode, and so on. However, the above-described operation mode is only an example, and another operation mode corresponding to a specific program may be used. For example, in a case where a user executes a document writing (editing, creating) program, an operation mode displaying a plurality of hot keys used in a document writing program (for example, a hot key or a macro key to change a font size) may be used. That is, the operation mode may be added or changed by a user selection or through an update.

The mode determination unit 160 may change an operation mode of the key pad unit 140. When an operation status of the electronic apparatus 100 is changed, the mode determination unit 160 may change a current operation mode to an operation mode corresponding to an operation mode of the changed electronic apparatus 100. When one of button areas displaying a plurality of operation modes individually is selected, the mode determination unit 160 may change a current operation mode to an operation mode corresponding to the selected button area.

The operation status of the electronic apparatus 100 may be selected by a user selection, for example, selection of a button or icon to execute a corresponding program and to generate an image and/or sound according to the executed program. The operation status of the electronic apparatus 100 may be set by a program according to a user preference set in advance when the electronic apparatus 100 is turned on or an operation of the electronic apparatus 100 is terminated or changed. For example, when a movie or a movie title is selected, the operation status of the electronic apparatus 100 is set to a reproducing operation status, and then the operation status of the key pad unit 40 is manually or automatically set to a multimedia mode. That is, the selected or set operation status can be used to change or set the operation mode of the key pad unit 140 as described above.

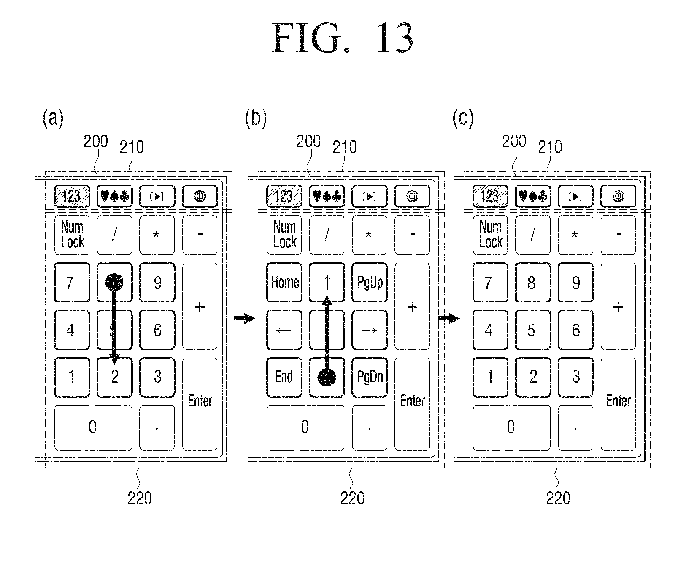

In addition, when a plurality of button areas are selected in a predefined order, the mode determination unit 160 may change a current operation mode to an operation mode corresponding to the predefined order. This will be explained later with reference to FIG. 13.

The authentication unit 170 may perform a user authentication operation by determining whether a plurality of selected button areas are a plurality of predefined button areas. If an operation mode of the key pad unit 140 is a log-in mode, a plurality of button areas of the key pad unit 140 may not display key information. In this case, a user may select a plurality of button areas as a specific pattern form, and the authentication unit 170 perform user authentication based on whether the input specific pattern is the same as the predefined specific pattern.

Meanwhile, in the exemplary embodiment, user authentication is performed based on a pattern form, but this is only an example. The key pad unit 140 may display key information corresponding to a number key mode (or a symbol mode) to perform user authentication using number information selected by a user.

The control unit 180 controls each component of the electronic apparatus 100. The control unit 180 may control the mode determination unit 160 to determine an operation mode of the key pad unit 140 to control the key pad unit 140 to display key information corresponding to the determined operation mode.

Once a button area is selected, the control unit 180 may perform an event corresponding to the selected button area and a current operation mode. The control unit 180 may determine an event corresponding to the button area and the current operation mode to perform the determined event. Alternatively, the key pad unit 140 may be configured to determine an event corresponding to the selected button area and the current operation mode to transmit information regarding the determined event to the control unit 180, so that the control unit 180 may perform an event corresponding to the received event information.

Here, an event may be a program to be executed as an operation or function in the electronic apparatus 100 or an operation or function of the components or units of the electronic apparatus 100. The event may be one of sub-events performed in the electronic apparatus 100. Accordingly, the control unit 180 performs one of the program as the event according to the selected operation mode or performs one of subprograms of the performing program according to the selected button area of the key pad unit 140.

If an operation mode of the key pad unit 140 is a multimedia mode, the control unit 180 may control the key pad unit 140 to display an image corresponding to contents currently being reproduced in one of a plurality of button areas. In addition, the control unit 180 may control the key pad unit 140 to display an image corresponding to a characteristic of the image, for example, a reproduction time of contents currently being reproduced in one of a plurality of button areas.

If an operation mode of the key pad unit 140 is an image display mode, the control unit 180 may control the key pad unit 140 to divide an image pre-stored in the storage unit 150 to display the divided image on corresponding ones of a plurality of button areas.

In addition, if an external apparatus 10, 20 is connected, the control unit 180 may control the key pad unit 140 to display at least one of apparatus information and/or connection information of the external apparatus 10, 20 in at least one of a plurality of button areas.

As described above, the electronic apparatus 100 according to an exemplary embodiment has a key pad which may be changed adaptively and thus, a user may control the electronic apparatus 100 by selecting one button without manipulating a plurality of keys.

FIG. 2 is a view illustrating a plurality of button areas 200 of the key pad unit 140 of the electronic apparatus 100 of FIG. 1 according to an exemplary embodiment of the present general inventive concept.

Referring to FIG. 2, the plurality of button areas 200 may include a first button group 210 and a second button group 220.

The first button group 210 is a group of button areas to display information on a plurality of operation modes individually. In the exemplary embodiment, the first button group 210 includes four (4) button areas 211, 212, 213, and 214, and each of the four button areas 211 to 214 in the first button group 210 displays an icon or information to correspond to a mapped operation mode or to identify a mapped operation mode.

The mapped operation mode may indicates a mode to assign one or more icon or information to the corresponding button areas or buttons 211 to 214 to represent the operation mode of the key pad unit 140 and/or the operation status of the electronic apparatus 100. The mapping is performed or preset to control the button areas 211 to 214 to corresponding to the operation modes. Accordingly, the button areas 211 to 214 can display one or more icons or information to represent the corresponding operation modes.

The second button group 220 is a group of button areas to display information regarding a plurality of keys corresponding to a determined operation mode individually. In the exemplary embodiment, the second button group 220 comprises seventeen (17) button areas, and each button area in the second button group 220 displays key information corresponding to a current operation mode.

Meanwhile, in the exemplary embodiment, the first button group 210 includes four (4) button areas, and the second button group 220 comprises seventeen (17) button areas, but the first button group 210 may include more than 5 or less than 3 button areas, and the second button group 220 may include more than 18 or less than 16 button areas.

In addition, in the exemplary embodiment, the three (3) button areas in the second button group 220 have a size (dimension) greater than that of other button areas, but it is possible that button areas may be configured to have the same size. Further, a number of button areas or only one or two button areas may be configured to have a size different from or greater than that of other button areas.

Meanwhile, the plurality of button areas 200 according to an exemplary embodiment may be realized as a touch screen. In this case, a plurality of divided key areas may be displayed as an image on a touch screen as illustrated in FIG. 2 and FIGS. 5 to 12.

In addition, the plurality of button areas 200 according to an exemplary embodiment may be realized as a plurality of buttons capable of displaying an image. A button may be referred to as a button area. The configuration and operation of a button area in such case will be explained below with reference to FIG. 3.

FIG. 3 is a side view illustrating the key pad unit 140 having a plurality of buttons. FIG. 3 is a side view of an A-A' area of FIG. 2 in which the key pad unit 140 is realized as a plurality of buttons.

Referring to FIG. 3, the key pad unit 140 includes a plurality of buttons 201 corresponding to the number of button areas illustrated in FIG. 2.

Each of the plurality of buttons 201 includes a display element 202, such as E-ink, LCD, AMOLED, and so on, on an upper portion thereof. The display element 202, such as E-ink, LCD (Liquid Crystal Display), AMOLED (Active Matrix Organic Light Emitting Diodes), and so on, may be attached to an upper portion of the button 201 or the display element 202 may be built in the button 201.

FIG. 4 is a view illustrating an electronic apparatus according to an exemplary embodiment of the present general inventive concept.

Referring to FIGS. 1 and 4, the electronic apparatus includes the display unit 130 and a body formed with the input unit 120 and the plurality of button areas 200. The plurality of button areas 200 may be disposed on a right side of the input unit 120 which is realized as a key board. In the exemplary embodiment, the plurality of button areas 200 are disposed on the right side of the input unit 120, but it is possible that the plurality of button areas 200 may be disposed on the left side of the input unit 120.

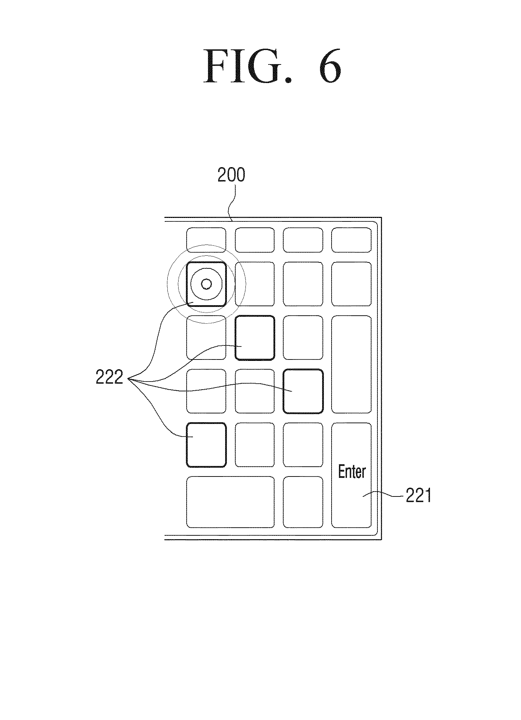

FIGS. 5 and 6 are views illustrating an operation of the key pad unit of FIGS. 1 and 2 in a log-in mode according to an exemplary embodiment of the present general inventive concept. The log-in mode is an operation mode to perform user authentication.

If an operation mode is a log-in mode, a display operation of the plurality of button areas 200 is inactivated. Herein, inactivating a display operation means that displaying of key information corresponding to a current operation mode is not activated as a display element on a button is turned off, or a display element displays a predetermined or reference colour, for example, a key board colour (for example, black).

However, as illustrated in FIG. 5, one button area (enter key area 221) may be excluded from the inactivation considering its importance as a key.

In this case, a user may select the plurality of button areas 200 as a specific pattern form. The input pattern may be used as user authentication information by the authentication unit 170 as described above.

In this case, the plurality of button areas 200 may display a button area 222 selected by a user using a shadow or a predetermined color as illustrated in FIG. 6 to identify the selected button.

FIG. 6 illustrates an enter button 221 and four (4) buttons 222 to form the user authentication information. A combination of a number of buttons may be set according to a preset operation in an electronic apparatus. Referring to FIGS. 1 and 6, the control unit 180 may compare the selected four buttons 222 with a reference to provide the authentication. If the selected four (4) buttons are identical to the reference, the control unit 180 allows the user to control the electronic apparatus and/or the input unit 120 and/or the key pad unit 140. It is possible that the control unit 180 can control the key pad unit 140 to provide or display the information corresponding to the current operation mode in response to the operation status of the electronic apparatus.

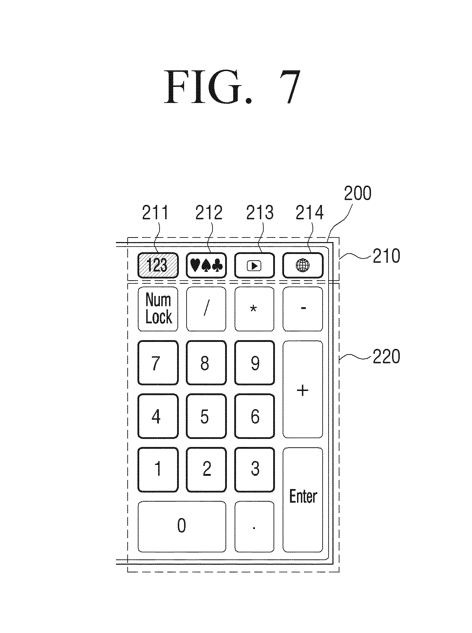

FIG. 7 is a view illustrating an operation of the key pad unit 140 of FIG. 2 in a number key mode according to an embodiment of the present general inventive concept. The number key mode is an operation mode to receive a number and four operation symbols from a user through the key pad unit 140.

Referring to FIG. 7, the plurality of button areas 200 may include the first button group 210 and the second button group 220.

The first button group 210 includes four (4) button areas 211, 212, 213, and 214 corresponding to four (4) operation modes. Herein, the first button area 211 is an area to select a number key mode, the second button area 212 is an area to select a symbol mode, the third button area 213 is an area to select a multimedia mode 213, and the fourth button is an area to select a favorite mode 214. Each button area 211, 212, 213, and 214 of the first button group 210 may display an icon to allow a user to recognize an operation mode mapped with each button area easily.

It is possible that the button areas 211 to 214 may display a characteristic, for example, a text, character, letter or image, to indicate the corresponding operation modes. The control unit 180 may control the key pad unit 140 to display one or more icon or information to indicate the corresponding operation modes. It is possible that the control unit 180 may control the key pad unit 140 according to the selection of at least one of the button areas 211 to 214.

FIG. 7 is an example of displaying a number key mode. As illustrated in FIG. 7, the first button area 211 may be displayed using a shadow which is different from those of the second button area 212 to the fourth button area 214. It is possible that the first button area 211 may be displayed in a different color from those of the second button area 212 to the fourth button area 214.

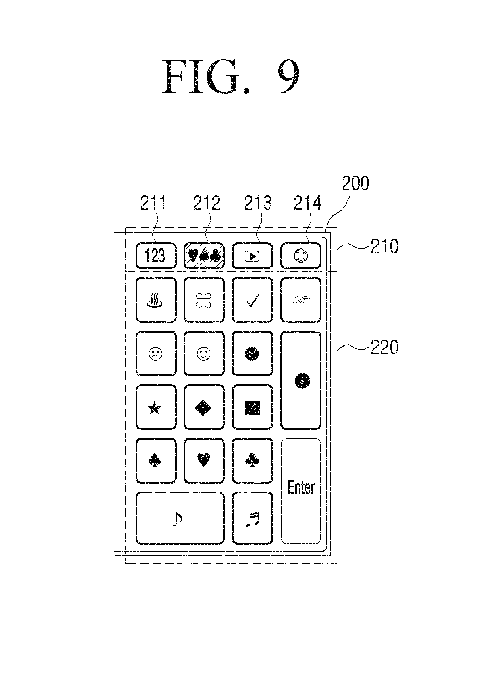

If a user selects a button area of the first button group 210, a mode may be changed to an operation mode corresponding to the selected button area. For example, if a user selects the second button area 212, a mode may be changed to a symbol mode corresponding to the second button area 212, and the plurality of button areas 200 may be displayed as illustrated in FIG. 9. In the case of a number key mode, if a user selects the first button area 211 corresponding to a number key mode, conversion of operation mode may not be performed, or a mode may be changed to another operation mode which is not mapped with the first button group 210.

It is possible that the operation status of the electronic apparatus 100 can be selected or changed according to the selection of the button areas 211 to 214 of the key pad unit 140 or according to a selection of programs or icons displayed on a screen of the display unit 130. The control unit 180 may change the operation mode of the key pad unit 140 according to the operation status in response to the selection of the button areas 211 to 214 or the selection of the programs or icons displayed on the display unit 130.

In the case of a number key mode, the second button group 220 may display information regarding a plurality of keys corresponding to a number key mode individually. As illustrated in FIG. 7, each of a plurality of button areas in the second button group 220 is mapped with a key where a general key pad is number-locked (specifically, number keys (0∼9), num (number)-lock key, four operation keys (+, -, *, /) and enter key), and each button area displays the corresponding mapped key information.

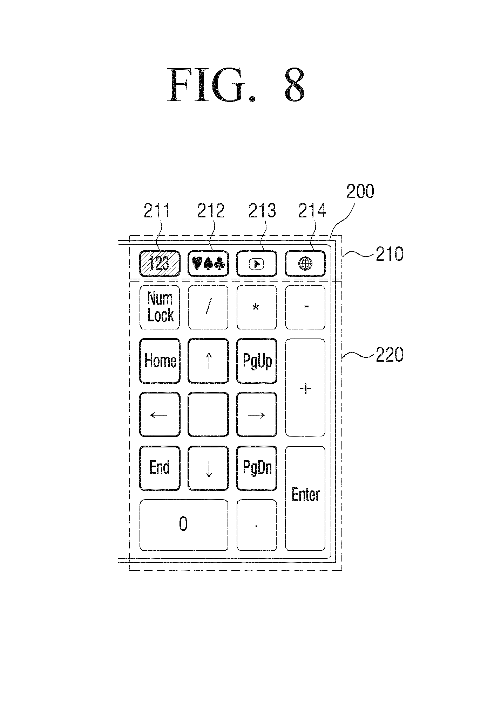

FIG. 8 is a view illustrating an operation of the key pad unit of FIGS. 1 and 2 in a direction key mode according to an exemplary embodiment of the present general inventive concept. The direction key mode is an operation mode to receive conversion of a screen or movement of a cursor from a user.

Referring to FIG. 8, the plurality of button areas 200 may include the first button group 210 and the second button group 220. The first button group 210 is the same as that of FIG. 7 and thus, the detailed description thereof will be omitted.

In the case of a direction mode, the second button group 220 may display information regarding a plurality of keys corresponding to the direction key mode individually. As illustrated in FIG. 8, each of a plurality of button areas in the second button group 220 is mapped with a key where a general key pad is not number-locked, and each button area displays its mapped key information as illustrated in FIG. 8.

FIG. 9 is a view illustrating an operation of the key pad unit of FIGS. 1 and 2 in a symbol mode according to an exemplary embodiment of the present general inventive concept. The symbol mode is an operation mode to receive a specific symbol such as an emoticon from a user.

Referring to FIG. 9, the plurality of button areas 200 may include the first button group 210 and the second button group 220. The first button group 210 is the same as that of FIG. 7 and thus, the detailed description thereof will be omitted.

In the case of a symbol mode, the second button group 220 may display information regarding a plurality of keys corresponding to the symbol mode individually. Each of a plurality of button areas in the second button group 220 is mapped with a key to select an emoticon, and each button area of the second button group 220 may display a mapped emoticon.

When a user selects the button areas of the second button group 220, the control unit 180 of FIG. 1 receives a characteristic of the selected button area to be used in the operation of the electronic apparatus 100. For example, the control unit 180 can add the characteristic corresponding to the selected button area to a text when the electronic apparatus 100 operates a document writing operation.

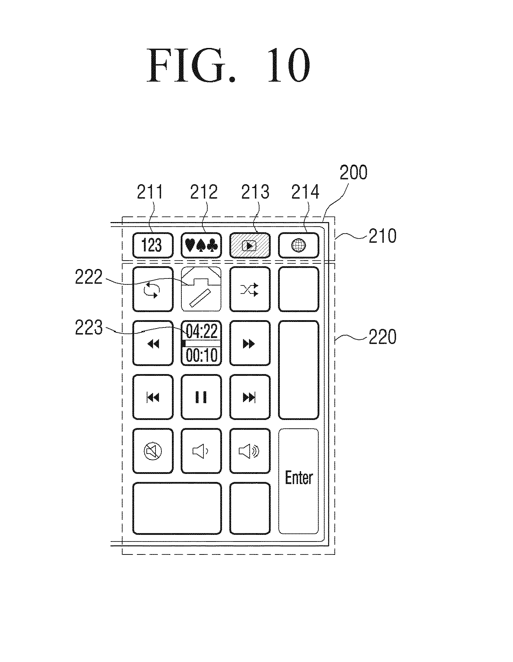

FIG. 10 is a view illustrating an operation of the key pad unit of FIGS. 1 and 2 in a multimedia mode according to an exemplary embodiment of the present general inventive concept. The multimedia mode is an operation mode to receive a control command regarding contents from a user.

Referring to FIG. 10, the plurality of button areas 200 may include the first button group 210 and the second button group 220. The first button group 210 is the same as that of FIG. 7 and thus, the detailed description thereof will be omitted.

In the case of a multimedia mode, the second button group 220 may display information regarding a plurality of keys corresponding to the multimedia mode individually. Specifically, each of a plurality of button areas in the second button group 220 is mapped with a hot key to control contents. In addition, as illustrated in FIG. 10, each button area of the second button group 220 may display an icon corresponding to a hot key to control contents.

In this case, at least one button area 222 of the second button group 220 may display an image corresponding to contents currently being reproduced, and at least one button area 223 of the second button group 220 may display an image corresponding to a reproduction time of contents currently being reproduced.

The control unit 180 may control a content reproducing unit (as a functional unit not illustrated) to perform a function of the multimedia mode in response to the command corresponding to the selected one of the button areas of the second button group 220. For example, a button area displaying a fast-forward function arrow is selected, the control unit 180 controls the content reproducing unit to display a fast-forward image of the reproduced contents on the screen of the display unit 130 in response to the command of the selected button.

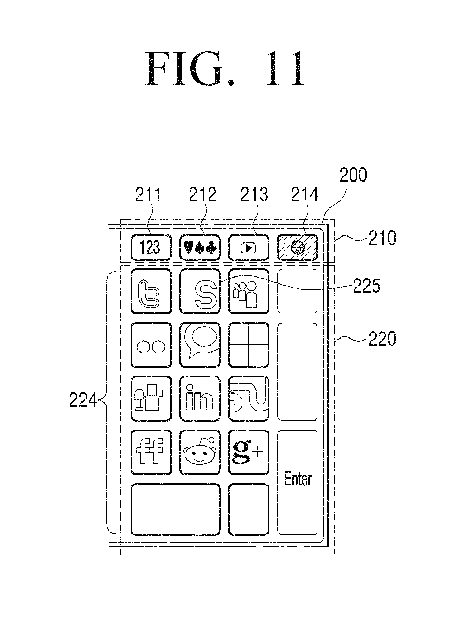

FIG. 11 is a view illustrating an operation of the key pad unit 140 of the electronic apparatus 100 of FIGS. 1 and 2 in a shortcut mode according to an exemplary embodiment of the present general inventive concept. The shortcut mode is an operation mode to receive from a user a command to go directly to a preferred internet address which is preset.

Referring to FIG. 11, the plurality of button areas 220 may include the first button group 210 and the second button group 220. The first button group 210 is the same as that of FIG. 7 and thus, the detailed description thereof will be omitted. However, if the fourth button area 214 is selected in an operation mode except for the shortcut mode, the control unit 180 may control to display the plurality of button areas 200 as illustrated in FIG. 11, and to display an internet window on a screen of the display unit 130.

In the case of the shortcut mode, the second button group 220 may display information regarding a plurality of keys corresponding to the shortcut mode individually. Each of a plurality of button areas in the second button group 220 may be mapped with a hot key to go directly to a predefined internet address. In addition, each button area of the second button group 220 may display an icon corresponding to a mapped internet address as illustrated in FIG. 11.

Meanwhile, if a user selects a button area of the second button group 220, the control unit 180 may control the display unit 130 to display an internet address corresponding to the selected button area on an internet window. If a button area of the second button group 220 is selected, the control unit 180 may control the key pad unit 140 to display an image corresponding to the selected button area on the second group 220 temporarily.

In response to the selection of the button area of the second button group 220, the control unit 180 controls the web browser and/or the communication interface unit 110 to access the internet through the internet address such that the internet window can display an image received from the internet address or communicate with an internet server to correspond to the internet address.

FIG. 12 is a view illustrating an operation of the key pad unit 140 of FIG. 1 and 2 in an image display mode according to an exemplary embodiment of the present general inventive concept. The image display mode is an operation mode to display a pre-stored image in a plurality of button areas.

Referring to FIG. 12, the plurality of button areas 200 may include the first button group 210 and the second button group 220. The first button group 210 is the same as that of FIG. 7 and thus, the detailed description thereof will be omitted.

In the case of the image display mode, the second button group 220 may be divided into the button areas and a pre-stored image may include a plurality of sub-imaged to be displayed in the corresponding button areas of the second button group 220.

Meanwhile, in the above exemplary embodiment, a button area of the first button group 210 is selected and an operation mode is changed according to the selection of the button area of the first button group 210. However, the number of button areas 211, 212, 213, and 214 of the first button group 210 may be less than the number of operation modes supported by the key pad unit 140. That is, a portion of the operation modes may not be included in the operation modes assigned to the button areas 211 to 214 of the first button group 210. In this case, a method of changing a mode to an operation mode which is not mapped with the first button group 210 will be explained with reference to FIG. 13.

FIG. 13 is a view illustrating a method of changing an operation mode of the key pad unit 140 of the electronic apparatus 100 of FIG. 1 according to an exemplary embodiment of the present general inventive concept.

Referring to a view (a) of FIG. 13, key information corresponding to a number key mode is displayed as illustrated in FIG. 7. In this case, if a user selects a plurality of button areas in the second button group 210 in a predefined order (number keys 8, 5, and 2 selected along an arrow in the exemplary embodiment) within a predefined time, the mode determination unit 160 may change a current mode to an operation mode which is not mapped with the first button group. Accordingly, as illustrated in a view (b) of FIG. 13, the plurality of button areas 200 may display key information corresponding to the direction key mode.

If a user selects a plurality of different button areas in another predefined order along an arrow in the same state as the view (b) of FIG. 13, the mode determination unit 160 may change a current operation mode to an operation mode which is mapped with the first button group (or the previous operation mode) 210. Accordingly, as illustrated in a view (c) FIG. 13, the plurality of button areas 200 may display key information corresponding to the direction key mode.

In the exemplary embodiment, only two predefined orders are illustrated, but it is possible that predefined orders may be defined or preset in various ways and various operation modes may be mapped with respect to the various predefined orders.

Therefore, the control unit 180 may control the key pad unit 140 according to selection of a predetermined order or combination of the button areas of the second button group 220

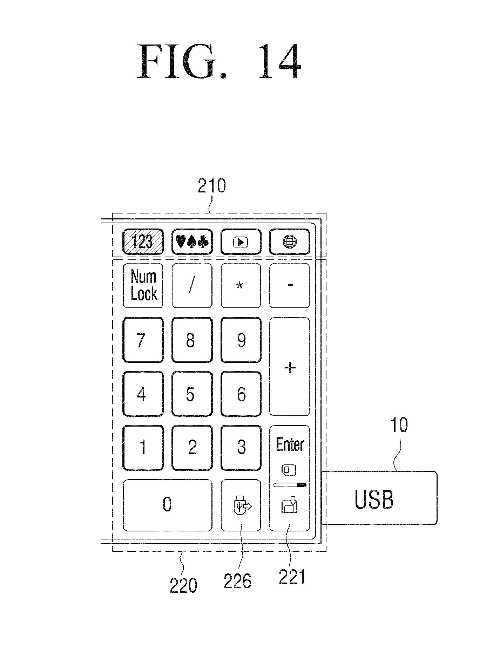

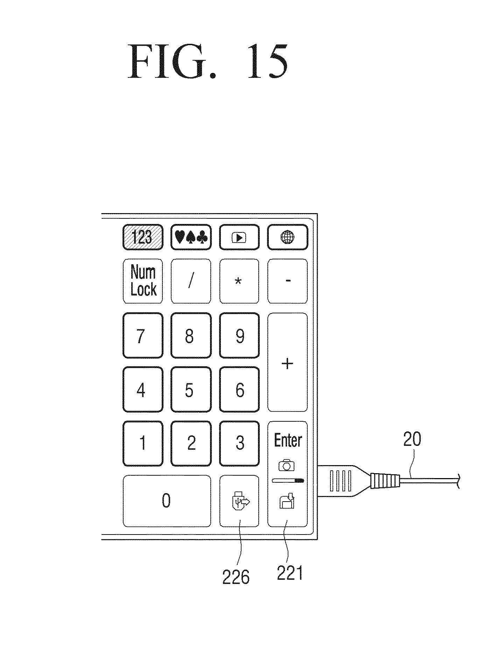

FIGS. 14 and 15 are views illustrating an operation of the key pad unit 140 of the electronic apparatus 100 of FIG. 1 when an external apparatus is connected.

Referring to FIG. 14, if a USB memory 10 is connected as an external apparatus, apparatus information and connection information of the external apparatus are displayed on a fifth button area 221. In this case, as the connected external apparatus is the USB memory 10, the control unit 180 controls the fifth button area 221 to display an icon representing a storage medium such that a user can recognize the connection of the USB memory 10 to the electronic apparatus 100 through the displayed icon of the fifth button area 221.

A sixth button area 226 may be changed from a"," or "." key as illustrated in FIG. 7 to a USB connection cut-off key as illustrated in FIG. 14. Accordingly, a user may cut off connection of the external apparatus 10 easily through the sixth button area 226. The control unit 180 can perform a disconnection operation easily or safely without disruption thereof.

Referring to FIG. 15, if a camera 20 is connected as an external apparatus, apparatus information and connection information of the external apparatus are displayed on the fifth button area 221. In this case, as the connected external apparatus is the camera 20, the control unit 180 controls the fifth button area 221 to display an icon representing a camera.

In addition, the sixth button area 226 may be changed from a "," or "." key as illustrated in FIG. 7 to a USB connection cut-off key. Accordingly, a user may cut off connection of the external apparatus 10 easily through the sixth button area 226. The control unit 180 can perform a disconnection operation easily or safely without disruption thereof.

As described above, the control unit 180 can control the button areas (buttons) of the key pad unit 140 of the electronic apparatus 100 to display one of characteristics to corresponding to one of operation modes. The storage unit 150 stores the characteristics of the operation modes to be assigned to the respective button areas of the key pad unit 140. The control unit 180 selects a portion of the stored characteristics to be displayed on the corresponding button areas. Accordingly, each of the button areas of the key pad unit 140 can display a first characteristic in a first operation mode and a second characteristic in a second operation mode in response to the operation status of the electronic apparatus 100 or in response to the selection of the operation mode corresponding to the key of the key pad unit 140. That is, a characteristic of the button area can be variable according to an operation mode or an operation status. Also, each of the button areas of the key pad unit 140 may display a characteristic to be added to a document in a writing operation or may display a command to control a contents reproducing operation. That is, a characteristic of the button area of the key pad unit 140 may be variable between a characteristic to be added in a writing operation and a command to control the contents reproducing operation. A characteristic of the button area of the key pad unit 140 may also be a status indicator to indicate the status of the electronic apparatus 100, for example, a connection or disconnection status of the electronic apparatus 100 with an external apparatus. As described above, the characteristic of the button area may be a text, image, icon, etc.

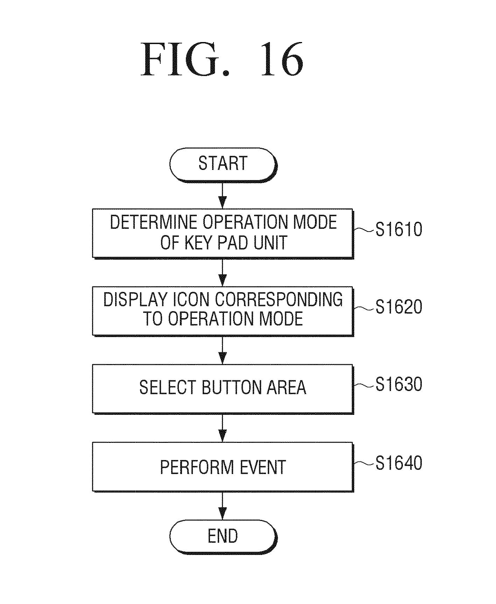

FIG. 16 is a flowchart illustrating a key inputting method according to an exemplary embodiment of the present general inventive concept.

Referring to FIG. 16, first of all, an operation mode of a key pad unit is determined at operation S1610. An operation mode of the key pad unit 140 may be determined according to an operation status of the electronic apparatus 100. For example, a multimedia mode may be determined as an operation mode if the electronic apparatus 100 is reproducing contents, and a shortcut mode may be determined as an operation mode if a user is surfing internet. Herein, the operation mode may be log-in mode, number key mode, multimedia mode, symbol mode, shortcut mode, image display mode, and so on.

Information regarding each of a plurality of keys corresponding to the determined operation mode is displayed on a plurality of button areas at operation S1620, which has been explained in detail with reference to FIGS. 1 to 15 and thus, further description will not be provided.

At least one of a plurality of button areas is selected at operation S1630.

An event corresponding to the selected button area and a current operation mode is performed at operation S1640. If a button area is selected, an event corresponding to the selected button area and the current operation mode may be determined and the determined event may be performed. For example, if the button area selected by a user belongs to the first button group, an event to change an operation mode of the key pad unit may be performed, and if the button area selected by a user belongs to the second button group, an event according to key information mapped with the corresponding button area may be performed.

As described above, a key inputting method according to an exemplary embodiment uses a key pad which may be changed adaptively, a user may control an electronic apparatus easily by selecting a single button without a plurality of key manipulations. The key inputting method of FIG. 16 may be performed not only in an electronic apparatus having configuration of FIG. 1 but also in an electronic apparatus having other configurations.

A plurality of information assigned to the corresponding button area to correspond to the respective operation modes may be stored in the storage unit 150, and the control unit 180 may read one of the plurality of information to display an image on the corresponding button according to the selected or determined one of the operation modes. The control unit 180 may be electrically connected to the display element of the button area through a communication line to transmit a signal corresponding to the information such that an image is displayed on the display element of the button area as the information.

It is possible that a plurality of images are pre-set or formed in the display element of the button area. When one of the operation modes is selected or determined, the control unit 180 generates a signal to be transmitted to the display element to select one of the preset images to be displayed as the information on the corresponding display element according to the selected operation modes. It is possible that the display element may have a number of light emitting diodes, and that a portion of light emitting diodes can be selected according to the signal of the control unit 180 to emit light to a portion of the selected image such that the emitted light highlights the corresponding image to corresponding to the selected operation mode. In this case, the other images may not be selected or may not be highlighted. In this case, it is possible that at least a portion of the plurality of images may overlap each other on the display element of each button area.

The control unit 180 may be electrically connected to a display element of the button area to display information assigned to the button area according to an operation mode thereof, and may also be mechanically and/or electrically connected to a button portion of the button area such that the control unit 180 can receive a touch input (input signal) from the button portion of the button area and then perform an operation corresponding to the operation mode. Accordingly, when the control unit 180 receives an input signal from the same button portion of the button area, the control unit 180 may control a sub-operation according to the received input signal and the displayed operation mode.

In addition, the above-described key inputting method may be realized as at least one execution program to execute the above-described key inputting method, and such an execution program may be stored in a computer-readable recording medium.

Accordingly, the present general inventive concept can also be embodied as computer-readable codes on a computer-readable medium in a computer system. The computer-readable medium can include a computer-readable recording medium and a computer-readable transmission medium. The computer-readable recording medium is any data storage device that can store data as a program which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. An electronic apparatus having a keyboard, comprising:
a keypad unit disposed on the keyboard to display a plurality of divided button areas;
a mode determination unit to determine an operation mode of the keypad unit; and
a control unit to control the keypad unit to display information regarding a plurality of keys corresponding to the determined operation mode on the plurality of button areas,
wherein the keypad unit has at least one image display element on an upper portion of each button area.

2. The apparatus of claim 1, wherein:
the keypad unit receives a selection of at least one button area from among the plurality of button areas; and
the control unit performs an event corresponding to the selected button area and a current operation mode.

3. The apparatus as claimed in claim 1 or claim 2, wherein the plurality of button areas comprises:
a first button group to display a plurality of operation modes individually; and
a second button group display information regarding the plurality of keys corresponding to the determined operation mode individually.

4. The apparatus as claimed in one of claim 1 to claim 3, wherein each of the plurality of key areas displays key information in an icon form.

5. The apparatus as claimed in claim 3, wherein:
the first button group receives a selection of an operation mode of the keypad; and
the control unit controls the key pad unit to display information regarding a plurality of keys corresponding to the operation mode selected through the first button group on the second button group.

6. The apparatus of claim 3, wherein the control unit controls the keypad unit to display a button area of a first button group corresponding to the determined operation mode in a different shadow or colour from that of other button areas of a first button group.

7. The apparatus as claimed in one of claim 1 to claim 6, wherein the mode determination unit, when the plurality of button areas are selected in a predefined order, changes a current operation mode to an operation mode corresponding to the predefined order.

8. The apparatus as claimed in one of claim 1 to claim 7, further comprising:
an authentication unit to perform user authentication by determining whether a plurality of button areas selected through the keypad unit are a plurality of predefined button areas,
wherein the control unit inactivates a display operation of the plurality of button areas before the user authentication and activates a display operation of the plurality of inactivated button areas after the user authentication.

9. The apparatus as claimed in one of claim 1 to claim 8, wherein the operation mode of the keypad unit is at least one of a login mode, a number key mode, a multimedia mode, a symbol mode, a shortcut mode, and an image display mode.

10. The apparatus of claim 9, wherein the control unit controls the keypad unit to display an image corresponding to contents currently being reproduced on at least one of the plurality of button areas if the operation mode of the keypad unit is the multimedia mode.

11. The apparatus of claim 9, wherein the control unit controls the keypad unit to display an image corresponding to a reproduction time of contents currently being reproduced on at least one of the plurality of button areas if the operation mode of the keypad unit is the multimedia mode.

12. The apparatus of claim 9, wherein the control unit controls the keypad unit to divide and display a pre-stored image on the plurality of button areas if the operation mode of the keypad unit is the image display mode.

13. The apparatus as claimed in one of claim 1 to claim 12, wherein the control unit, when an external apparatus is connected to the electronic apparatus, controls the keypad unit to display at least one information from among apparatus information and connection information of the external apparatus on at least one of the plurality of button areas.

14. The apparatus of claim 1, wherein the display element is one of E-ink, LCD, and AMOLED.

15. A key inputting method in an electronic apparatus including a keypad unit which is disposed on a keyboard and displays a plurality of divided button areas, the method comprising:
determining an operation mode of the keypad unit;
displaying information regarding each of a plurality of keys corresponding to the determined operation mode in the plurality of button areas;
receiving a selection of at least one button area from among the plurality of button areas; and
performing an event corresponding to the selected button area and a current operation area,
wherein the keypad unit has at least one image display element on an upper portion of each button area.
